## Europäisches Patentamt
## European Patent Office
## Office européen des brevets

(11) Veröffentlichungsnummer: **0 092 824**
**B1**

(12)

# EUROPÄISCHE PATENTSCHRIFT

(45) Veröffentlichungstag der Patentschrift:
**10.08.88**

(51) Int. Cl.⁴: **A 01 D 45/30**

(21) Anmeldenummer: **83103991.2**

(22) Anmeldetag: **23.04.83**

(54) **Erntebergungsvorrichtung für eine Saatgut-Erntemaschine.**

(30) Priorität: **26.04.82 US 371741**

(43) Veröffentlichungstag der Anmeldung:
**02.11.83 Patentblatt 83/44**

(45) Bekanntmachung des Hinweises auf die Patenterteilung:
**10.08.88 Patentblatt 88/32**

(84) Benannte Vertragsstaaten:
**BE DE FR GB IT**

(56) Entgegenhaltungen:
**CA-A-1 107 599**
**DE-C-933 789**
**FR-A-1 240 440**
**GB-A-809 616**
**US-A-1 146 785**
**US-A-2 460 029**

(73) Patentinhaber: **Lundahl, Ezra Cordell, 710 N. Sixth Street W., Logan, Utah 84321 (US)**

(72) Erfinder: **Lundahl, Ezra Cordell, 710 N. Sixth Street W., Logan, Utah 84321 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 092 824 B1

## Beschreibung

Die Erfindung bezieht sich auf eine Erntebergungsvorrichtung für eine Saatgut-Erntemaschine mit zwei gegenläufig antreibbaren, auf quer zur Bewegungsrichtung des zu fördernden Erntegutes verlaufenden Achsen angeordneten, zylinderförmigen und Borsten aufweisenden Abstreiforganen, die etwa gleichen Durchmesser aufweisen und zwischen sich einen Durchlaßspalt bilden und durch diesen das Saatgut einer nachgeschalteten Fördervorrichtung zuführen, wobei die Borsten dicht auf der Oberfläche der Abstreiforgane verteilt sind, eine widerstandsfähige, zylindrische Mantelfläche bilden, die Achse des oberen Abstreiforgans vor der Achse des unteren Abstreiforgans liegt und den Abstreiforganen mindestens ein Fördergebläse zugeordnet ist.

Derartige Erntebergungsvorrichtungen stellen eine kostengünstige Alternative zu herkömmlichen Mähdreschern dar. Durch die bürstenförmigen Abstreiforgane wird das zu erntende Gut ausgerieben, und die Stengel verbleiben im Boden, d. h. es findet kein Mähvorgang statt. Da aber das zu erntende Gut niemals eine gleiche Höhe aufweist, ist die Zuführung nur des Samenkopfes bzw. der Ähren bei Getreide problematisch. Auch dies ist bei der gattungsmäßig berücksichtigten Erntebergungsvorrichtung (GB-A-809 616) der Fall, da hier das Gebläse in einem Abstreiforgan angeordnet ist und nur dazu dient, das geerntete Gut weiterzufördern. Durch diese Anordnung wird in diesem Bereich kein Ausdreschen stattfinden, wobei je nach Höhe des zu erntenden Gutes der Samenkopf bzw. die Ähren überhaupt nicht oder nicht zuerst in den Durchlaßspalt gelangen.

Aus der FR-A-1 240 440 ist ein Fördergebläse bekannt, über das Ähren auf eine Einzugswalze zu geblasen werden.

Die mit der Erfindung zu lösende Aufgabe wird darin gesehen, daß das sich auf den Halmen befindliche abzuerntende Gut ohne weiteres von den Abstreiforganen erfaßt und leicht geerntet wird.

Diese Aufgabe ist dadurch gelöst, daß die Mantelfläche der Abstreiforgane durchgehend ist, die Umfangsgeschwindigkeit der beiden Abstreiforgane zwischen 18 und 27 m/sec liegt und der Auslaß des Fördergebläses auf den Durchlaßspalt gerichtet vor den Abstreiforganen angeordnet ist. Auf diese Weise bewirkt der Luftstrom des Gebläses zunächst, daß die Samenköpfe bzw. Ähren, bevor sie von den Abstreiforganen erfaßt werden können, sich in Richtung auf den Durchlaßspalt biegen und dann leicht auch bei unterschiedlicher Halmhöhe von den Abstreiforganen erfaßt werden können, wobei die Umfangsgeschwindigkeit ein vollständiges Ausdreschen begünstigt und ein Wickeln der Halme verhindert. Das ausgedroschene Gut wird dann auch noch mit Hilfe des Luftstroms durch den Durchlaßspalt in einen den Abstreiforganen nachgeschalteten Förderer geleitet, so daß das Fördergebläse zwei Funktionen wahrnimmt und so angeordnet ist, daß es die Mantelfläche eines Abstreiforganes nicht unterbricht.

Eine besonders günstige Umfangsgeschwindigkeit der Abstreiforgane liegt zwischen 21 und 23 m/sec.

Wenn zudem die Erntebergungsvorrichtung ein unteres Fördergebläse in einem Gebläsegehäuse aufweist, dessen Auslaßöffnung im Bereich des unteren Abstreiforgans endet und Luft an der Rückseite desselben entlang nach hinten in die Fördervorrichtung leitet, wird erfindungsgemäß erreicht, daß von dem unteren Abstreiforgan eventuell mitgenommenes Gut wieder in den Luftstrom des anderen Fördergebläses zurückgefördert wird.

Die Vielseitigkeit der Erntebergungsvorrichtung wird dadurch noch erhöht, daß die Achsen der Abstreiforgane einzeln höhenverstellbar auf Tragarmen angeordnet sind.

In der Zeichnung ist ein Ausführungsbeispiel einer Erntebergungsvorrichtung nach der Erfindung schematisch dargestellt. Es zeigt:

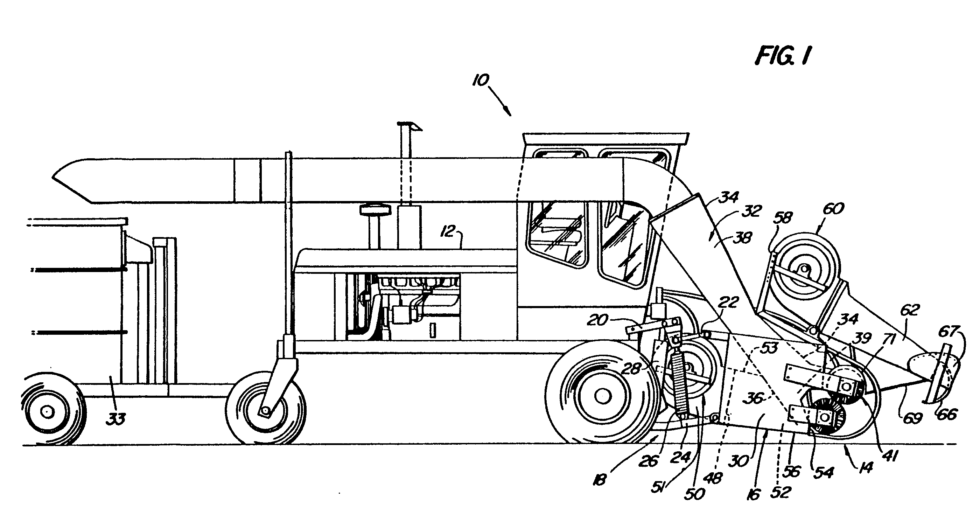

Fig. 1    eine Seitenansicht einer Erntemaschine mit der erfindungsgemäßen Erntebergungsvorrichtung;

Fig. 2    eine Frontansicht der Erntemaschine;

Fig. 3    eine Teilansicht von Abstreiforganen der Erntebergungsvorrichtung.

In der Zeichnung ist mit 10 eine selbstfahrende Saatgut-Erntemaschine bezeichnet, die ein Fahrgestell 12 aufweist, an dessen Frontseite eine vertikal verstellbare Erntebergungsvorrichtung 14 mit einem Gehäuse 16 angeordnet ist. Die Erntebergungsvorrichtung 14 ist an die Saatgut-Erntemaschine 10 über eine Kupplungsvorrichtung 18 angeschlossen, zu der ein oder mehrere Oberlenker 20 gehören, die einenends an die Saatgut-Erntemaschine 10 und anderenends mit ihren vorderen Enden gelenkig an hintere Enden von Armen 22 angeschlossen sind. Die vorderen Enden der Arme 22 sind gelenkig mit dem Gehäuse 16 verbunden. Die Kupplungsvorrichtung 18 weist ferner untere Lenker 24 auf, die einenends mit der Saatgut-Erntemaschine 10 und anderenends mit dem Gehäuse 16 verbunden sind. Die oberen und unteren Lenker 20 und 24 sind über Zugfedern 26 miteinander verbunden. Die Erntebergungsvorrichtung 14 kann über Hydraulikzylinder 28 angehoben bzw. abgesenkt werden, die hierzu einenends mit dem Fahrgestell 12 und anderenends mit den Lenkern 20 verbunden sind und über ein hydraulisches Steuersystem betätigbar sind.

Das Gehäuse 16 weist zwei Seitenwände 30 auf, die über eine in der Zeichnung nicht dargestellte, querverlaufende Wand verbunden sind, an die die unteren Lenker 24 angeschlossen sind. An das Gehäuse 16 ist zur Aufnahme und zur Weiterleitung der von den Ähren getrennten Körner bzw. des Saatgutes ein Förderkanal 32 angeschlossen. Der Förderkanal 32 endet oberhalb eines einen Sammelbehälter 33 aufweisenden Anhängers, der an die Erntebergungsmaschine 10 angekuppelt ist. Der Förderkanal 32 besteht aus einem Boden 36, einer oberen Wand 34 sowie Seitenwänden 38. Die Seitenwände 38 des Förderkanals 32 liegen bündig an den Seitenwänden 30 des Gehäuses 16 an. Der Aufnahmeteil bzw. die Einlaßöffnung 39 des Förderkanals 32 befindet sich zwischen den Seitenwänden 30 der Erntebergungsvorrichtung 14, unmittelbar hinter einer Erntegutabstreifvorrichtung 41, die im vorderen Bereich der Erntebergungsvorrichtung 14 vorgesehen ist.

Im hinteren Bereich des Gehäuses 16 befindet sich ein erstes Fördergebläse 50, das einen Überdruck aufweisenden Luftstrom erzeugt. Das Fördergebläse 50 ist in einem Gebläsegehäuse 51 aufgenommen, das mit einer Auslaßöffnung 48 versehen ist, über das Luft in einen Leitkanal 52 und dann in die Einlaßöffnung des Förderkanals 32 gelangt. Über den in den Förderkanal 32 eintretenden Luftstrom wird hinter der Erntegutabstreifvorrichtung 41 ein geringer Unterdruck erzeugt. Der Leitkanal 52 wird auch aus den Seitenwänden 30 des Gehäuses 16 sowie einer sich vom Förderkanal 32 weg erstreckenden Wand 53 sowie einer aufrechtstehenden Stirnseite 54 sowie einem zwischen den Seitenwänden 30 verlaufenden Boden 56 und dem Boden 36 des Förderkanals 32 gebildet. Die Stirnseite 54 bildet eine aufrechtstehende Leitvorrichtung, die den Luftstrom umlenkt. Die Einlaßöffnung bzw. der Einlaßkanal 39 des Förderkanals 32 endet unmittelbar vor dem Boden 56 und der aufrechtstehenden Stirnseite 54, die mit dem Boden 36 somit einen Spalt bildet, durch den der Luftstrom geleitet wird. Der Luftstrom nimmt die mittels der Erntegutabstreifvorrichtung 41 geernteten Körner auf und fördert diese zum Sammelbehälter 33.

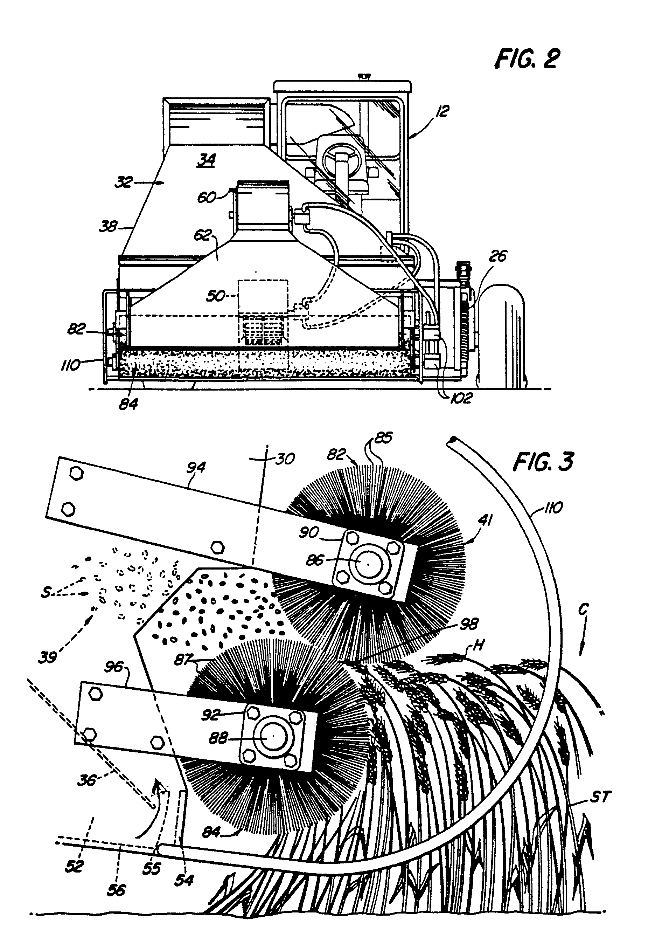

Oben auf einem Rahmen 58 oberhalb des Gehäuses 16 befindet sich ein zweites Fördergebläse 60, das einen Luftstrom erzeugt, der nach hinten gerichtet ist, und zwar in die Hauptförderrichtung der Erntegutabstreifvorrichtung 41. Das Fördergebläse 60 weist einen Förderkanal 62 auf, der mit einer gekrümmten Leitvorrichtung 66 in seinem vorderen Bereich versehen ist, um den Luftstrom entsprechend umzuleiten. Die Leitvorrichtung 66 ist mittels Seitenteilen 67 verstellbar an dem Förderkanal 62 angeschlossen, so daß die Neigung der Leitvorrichtung entsprechend variiert werden kann. Der Luftstrom im Förderkanal 62 wird nach unten und hinten gegen die Ähren bzw. Halme des Erntegutes vor der Erntegutabstreifvorrichtung 41 geleitet, um die Halme ST nach hinten zu drücken und die Ähren H des Erntegutes C in eine entsprechende Lage (Fig. 3) zu bringen, so daß sie von der Erntegutabstreifvorrichtung 41 einwandfrei erfaßt werden können.

Die Erntegutabstreifvorrichtung 41 weist ein oberes und ein untere Abstreiforgan 82, 84 auf, die mit Bezug auf die Förderrichtung des Erntegute auf querverlaufenden Achsen 86, 88 angeordnet sind. Die Abstreiforgane 82, 84 weisen entsprechende Abtreifelemente auf bzw. sind als rotierende Borsten ausgebildet, die die Körner von den Ähren abstreifen.

Die in Fig. 3 als rotierende Borsten 85 und 87 ausgebildeten Abstreiforgane 82 und 84 können beispielsweise aus relativ widerstandsfähigen bzw. steifen Kunststoffborsten, wie z. B. Polyäthylenborsten, gebildet sein. Die einzelnen Borsten 85, 87 sind so lang und weisen an ihren radialen äußeren Enden untereinander einen derart großen Abstand auf, daß sie eine entsprechende widerstandsfähige Außenoberfläche bilden, die, wenn sie mit dem Erntegut in Kontakt kommt, die einzelnen Körner von den Ähren entsprechend abstreift. Die Enden der Borsten können beispielsweise einen Abstand untereinander aufweisen, der zwischen 1,27 cm und 3,08 cm liegt. Der Querschnitt der Borsten kann beispielsweise elliptisch ausgebildet sein, wobei die einzelnen Borsten gewellt bzw. gekräuselt oder geriffelt oder auf ähnliche Weise ausgebildet sein können. Der Durchmesser der Abstreiforgane 82 und 84 kann beliebig gewählt werden. Vorzugsweise weisen die Abstreiforgane einen Durchmesser auf, der zwischen 15 und 20 cm liegt.

Die die Abstreiforgane 82 und 84 aufnehmenden Achsen 86 und 88 sind endseitig in Lagern 90, 92 beiderseits des Gehäuses 16 drehbar aufgenommen. Die oberen Lager 90 des oberen Abstreiforgans 82 sind an den vorderen Enden von verstellbaren Tragarmen 94 und die unteren Lager 92 des unteren Abstreiforgans 84 in unteren, verstellbaren Tragarmen 96 angeordnet. Mittels der Tragarme 94 und 96 können die Abstreiforgane 82, 84 unabhängig voneinander angehoben bzw. abgesenkt werden, um auf diese Weise die Erntegutabstreifvorrichtung 41 der unterschiedlichen Höhe des Erntegutes anzupassen.

Die Borsten 85, 87 liegen vorzugsweise dicht nebeneinander und bilden einen Durchlaßspalt 98 bzw. eine spaltförmige Einzugszone zwischen den Abstreiforganen, in den die Ähren eingeführt werden, so daß die Körner aus den Ähren entfernt bzw. herausgerieben werden können. Aus diesem Grunde drehen sich die Abstreiforgane 82 und 84 gegenläufig zueinander, wobei die Frontseite des oberen Abstreiforgans sich nach unten bewegt, während sich die Frontseite des unteren Abstreiforgans nach oben bewegt. Somit wandern die Borstenenden rückwärts durch den Durchlaßspalt 98.

Die Abstreiforgane 82 und 84 sind so ausgerüstet, daß der Eintritt der Ähren in den Durchlaßspalt 98 ermöglicht bzw. erleichtert wird. Insbesondere liegt die untere Seite des unteren Abstreiforgans 82 unterhalb der Ebene der Ähren des noch stehenden Erntegutes, während die Achse des oberen Abstreiforgans 82 oberhalb der Ähren des noch stehenden Erntegutes liegt. Ferner liegen die Borsten 85 des oberen Abstreiforgans 82 etwas vor den Borsten 87 des unteren Abstreiforgans 84, d.h. die vertikal verlaufende Querebene des Abstreiforgans 82 liegt vor der vertikal verlaufenden Querebene des unteren Abstreiforgans 84. Auf diese Weise können die oberen Borsten, die auf längeren Halmen wachsenden Ähren erfassen, bevor sie in den Durchlaßspalt 98 gelangen, so daß dadurch die Ähren herabgedrückt und in eine geneigt verlaufende Lage gebracht werden, die in etwa der Richtung des Luftstromes des Fördergebläses 60 entspricht. Die in diese Lage gebrachten Ähren verbleiben in dieser Lage bzw. werden durch das obere Abstreiforgan 82 noch weiter herabgedrückt bzw. geneigt.

Der durch das Fördergebläse 60 hervorgerufene Luftstrom wird durch die durch die beiden Abstreiforgane 82 und 84 hervorgerufene Saugluft aufgrund der hohen Rotorgeschwindigkeiten unterstützt.

Somit wird das stehende Erntegut durch den nach hinten gerichteten Luftstrom des Fördergebläses 60 einerseits und durch die Saugluft des unteren Fördergebläses 50 sowie die Saugluft der Abstreiforgane 82 und 84 andererseits beeinflußt. Hierdurch werden die Stengel des Erntegutes nach hinten gebogen und erhalten dadurch im Bereich des Durchlaßspalt 98 Kontakt mit den Enden der Borsten, so daß die Körner aus den Ähren herausgerieben bzw. abgestreift werden können.

Das obere Fördergebläse 60 der Erntebergungsmaschine erzeugt einen Luftdurchsatz von ca. 2,27 m$^3$/sec, mit einer Strömungsgeschwindigkeit von etwa 44 m/sec am Auslaß des Fördergebläses 60. Im Bereich der Einlaßseite der Abstreiforgane 82 und 84 herrscht eine Strömungsgeschwindigkeit von 20 m/sec. Das untere Fördergebläse 50 erzeugt eine Strömungsgeschwindigkeit von 2,05 m$^3$/sec, wobei die Luft mit einer Geschwindigkeit von 30 m/sec durch den Spalt 55 geleitet wird.

Die abgestreiften Körner werden mittels der rotierenden Borsten 85 und 87 dem Luftstrom der beschriebenen Erntebergungsvorrichtung 14 zugegeben.

Die hintere Seite des Abstreiforgans 84 ist so plaziert, daß der Luftstrom des unteren Fördergebläses 50 nach oben über die zugehörigen Borsten 87 geleitet wird und somit in den Förderkanal 32 gelangt und dabei auch die Körner erfaßt, die aus dem Hauptluftstrom herausgewandert sind.

In vorteilhafter Weise weisen die Abstreiforgane 82, 84 eine Umfangsgeschwindigkeit auf, die zwischen 18 und 27 m/sec liegt. Besonders vorteilhaft ist auch eine Umfangsgeschwindigkeit zwischen 21 und 23 m/sec, um eine ausreichende Abstreifwirkung und Aufnahme des Erntegutes im Luftstrom zu erreichen. Bei zu hoher Umfangsgeschwindigkeit wird das Erntegut in verschiedene Richtungen wahllos gestreut, so daß ein entsprechender Verlust eintritt. Bei zu niedriger Umfangsgeschwindigkeit bleibt ein großer Teil der Körner in den Ähren, und die Ähren neigen dann dazu, sich auf den Abstreiforganen 82 und 84 aufzuwickeln.

Die Abstreiforgane werden über zwei getrennte Motoren 102 angetrieben, die an einer Seite der Erntebergungsvorrichtung 14 vorgesehen sind und beispielsweise über das hydraulische System der Saatgut-Erntemaschine 10 antreibbar sind. Im Ausführungsbeispiel sind die beiden Motoren in Reihe geschaltet, so daß das obere Abstreiforgan 82 schneller angetrieben wird als das untere Abstreiforgan und dabei eine Reib- bzw. Rubbelwirkung auf die nicht behandelten Ähren ausgeübt wird, wenn sie in den Durchlaßspalt 98 gelangen. Die Leckverluste aus dem oberen Motor werden zu dem Sammelbehälter des Hydrauliksystems zurückgeführt.

Die Erntebergungsvorrichtung 16 weist Halmteiler 110 auf, die das stehende Erntegut vor den Abstreiforgane 82 und 84 teilt.

Im Arbeitseinsatz fährt die Erntebergungsmaschine 10 über ein Feld mit stehendem Getreide C, beispielsweise Weizen, wobei jedoch auch anderes Getreide mit der erfindungsgemäßen Erntebergungsmaschine geerntet werden kann.

Nähern sich die Ähren H dem Durchlaßspalt 98, so werden die Stengel ST des Getreides C unter der Wirkung des nach hinten und unten gerichteten Luftstromes des Fördergebläses 60 der Sogwirkung des Fördergebläses 50 sowie durch den durch die Abstreiforgane 82 und 84 erzeugten Luftstrom nach hinten geneigt (Fig. 3). Hierdurch gelangen die Ähren in den Durchlaßspalt 98. Hochstehende Ähren werden anfänglich zuerst von dem oberen Abstreiforgan 82 erfaßt und dann in den Durchlaßspalt 98 geleitet. Sobald die Ähren in den Durchlaßspalt 98 gelangen, wirken die beiden Außenflächen der Abstreiforgane 82 und 84 auf die Ähren ein, wobei die sich sehr schnell nach hinten bewegenden Spitzen der Borsten die Körner S von den Ähren abstreifen und sie gleichzeitig in den Förderstrom leiten, so daß sie dann in die Einlaßöffnung 39 des Förderkanals 32 gelangen.

Ähren auf kürzeren Halmen werden von der Frontseite des unteren Abstreiforgans 84 erfaßt, so daß ebenfalls die Körner abgestreift werden und in den Durchlaßspalt 98 gelangen. Falls es notwendig ist, werden auch diese Ähren über das obere Abstreiforgan 82 nach hinten gebogen.

Die Halme mit den Ähren bleiben nach dem Abstreifvorgang auf dem Feld und gelangen durch die Weiterfahrt der Saatgut-Erntemaschine 10 unterhalb die Erntebergungsvorrichtung. Durch die willkürliche Anordnung der Borstenenden wird eine durchgehende bzw. feste Förderoberfläche für die Ähren, jedoch nicht für die relativ dünnen Stengel gebildet. Auf diese Weise können die meisten Stengel ohne weiteres durch des untere Abstreiforgan 84 bewegt werden, ohne daß sie dabei aus dem Boden herausgerissen werden. Bei einer Rotorgeschwindigkeit zwischen 18 und 27 m/sec vorzugsweise zwischen 21 und 23 m/sec wird ein ausreichendes Abstreifen bzw. Lösen der Körner aus den Ähren gewährleistet, so daß diese in den Luftstrom abgegeben werden können, ohne daß sich dabei die Stengel auf den Abstreiforganen 82 und 84 aufwickeln bzw. festsetzen. Körner, die dem Hauptluftstrom nicht zugeführt bzw. aus dem Hauptluftstrom herausgetragen worden sind und dann unterhalb das Abstreiforgan 84 gelangen, werden von dem Luftstrom des Fördergebläses 50 erfaßt und zurück zum Hauptluftstrom gefördert. Die aufgesammelten Körner werden dann von dem Förderkanal 32 erfaßt und dem Sammelbehälter 33 auf einem Anhängefahrzeug zugeführt.

Aus Vorstehendem geht hervor, daß die Saatgut-Erntemaschine kleiner und weniger teuer als herkömmliche Erntemaschinen ist, da weniger Kaff und Stroh anfällt. Durch die Verwendung der Erntegutabstreifvorrichtung 41 wird gewährleistet, daß die Stengel im Boden bleiben, so daß kleinere, schmälere und weniger komplizierte Arbeitsorgane notwendig sind. Ferner können die Antriebsmittel wesentlich reduziert werden. Als besonders vorteilhaft wird die Umfangsgeschwindigkeit der Abstreiforgane 82 und 84 angesehen, die ein ausreichendes Abstreifen der Körner von den Ähren gewährleisten, ohne daß die Stengel aus dem Boden herausgerissen werden. Ferner wird durch die vorteilhafte Plazierung der beiden Abstreiforgane zueinander (siehe Fig. 3) und durch die vorteilhafte Zuordnung der Abstreiforgane zu dem oberen und unteren Luftstrom ein ausgesprochen gutes Abstreifergebnis und eine entsprechend gute Aufnahme der Körner in der Förderluft gewährleistet.

**Patentansprüche**

1. Erntebergungsvorrichtung für eine Saatgut-Erntemaschine mit zwei gegenläufig antreibbaren, auf quer zur Bewegungsrichtung des zu fördernden Erntegutes verlaufenden Achsen (86, 88) angeordneten, zylinderförmigen und Borsten (85, 87) aufweisenden Abstreiforganen (82, 84), die etwa gleichen Durchmesser aufweisen und zwischen sich einen Durchlaßspalt (98) bilden und durch diesen das Saatgut einer nachgeschalteten Fördervorrichtung zuführen, wobei die Borsten (85, 87) dicht auf der Oberfläche der Abstreiforgane (82, 84) verteilt sind, eine widerstandsfähige, zylindrische Mantelfläche bilden, die Achse (86) des oberen Abstreiforgans (82) vor der Achse (88) des unteren Abstreiforgans (84) liegt und den Abstreiforganen (82, 84) mindestens ein Fördergebläse (50 bzw. 60) zugeordnet ist, dadurch gekennzeichnet, daß die Mantelfläche der Abstreiforgane (82, 84) durchgehend ist, die Umfangsgeschwindigkeit der beiden Abstreiforgane (82, 84) zwischen 18 und 27 m/sec liegt und der Auslaß des Fördergebläses (60) auf den Durchlaßspalt (98) gerichtet vor den Abstreiforganen (82, 84) angeordnet ist.

2. Vorrichtung nach Anspruch 1, dadurch gekennzeichnet, daß die Umfangsgeschwindigkeit der beiden Abstreiforgane (82, 84) zwischen 21 und 23 m/sec liegt.

3. Vorrichtung nach Anspruch 1, dadurch gekennzeichnet, daß die Erntebergungsvorrichtung (14) ein unteres Fördergebläse (50) in einem Gebläsegehäuse (51) aufweist, dessen Auslaßöffnung (Spalt 55) im Bereich des unteren Abstreiforgans (84) endet und Luft an der Rückseite desselben entlang nach hinten in die Fördervorrichtung (Förderkanal 32) leitet.

4. Vorrichtung nach einem oder mehreren der vorhergehenden Ansprüche, dadurch gekennzeichnet, daß die Achsen (86, 88) der Abstreiforgane (82, 84) einzeln höhenverstellbar auf Tragarmen (94, 96) angeordnet sind.

**Claims**

1. Harvesting device for a seed-goods harvesting machine with two oppositely rotating and cylindrically formed stripping members (82, 84) arranged on axes (86, 88) running transverse to the direction of movement of the harvested material to be conveyed and comprising bristles (85, 87), which members have approximately the same diameter and form a through gap (98) therebetween and feed the seed goods therethrough to a following conveyor device, the bristles (85, 87) being distributed densely over the surface of the stripping members (82, 84), forming a resistant cylindrical outer surface, the axis (86) of the upper stripping member (82) lying in front of the axis (88) of the lower stripping member (84) and at least one conveyor blower (50 or 60) being associated with the stripping members (82, 84), characterized in that the outer surface of the stripping members (82, 84) is continuous, the peripheral velocity of the two stripping members (82, 84) lies between 18 and 27 m/sec and the outlet of the conveyor blower (60) is arranged in front of the stripping members (82, 84), directed towards the through gap (98).

2. Device according to claim 1, characterized in that the peripheral velocity of the two stripping members (82, 84) lies between 21 and 23 m/sec.

3. Device according to claim 1, characterized in that the harvesting device (14) has a lower conveyor blower (50) in a blower housing (51), whose outlet opening (gap 55) terminates in the region of the lower stripping member (84) and feeds air along the rear side of the same rearwardly into the conveyor device (conveyor channel 32).

4. Device according to one or more of the preceding claims, characterized in that the axes (86, 88) of the stripping members (82, 84) are arranged individually adjustable in height on support arms (94, 96).

**Revendications**

1. Dispositif de récolte pour machine à récolter les semences, comportant deux organes séparateurs (82, 84) pouvant être entraînés en sens opposés, montés sur des axes (86, 88) s'étendant transversalement à la direction de déplacement des produits de récolte à transporter, cylindriques et comportant des poils (85, 87), qui présentent sensiblement le même diamètre et forment entre eux un interstice de passage (98), et amènent par celui-ci les semences à un dispositif de transport monté en aval, les poils (85, 87) étant répartis avec une forte densité à la surface des organes séparateurs (82, 84), formant une surface latérale cylindrique résistante, l'axe (86) de l'organe séparateur supérieur (82) se trouvant devant l'axe (88) de l'organe séparateur inférieur (84) et au moins un ventilateur de transport (50 ou 60) étant rattaché aux organes séparateurs (82, 84), caractérisé en ce que la surface latérale des organes séparateurs (82, 84) est continue, en ce que la vitesse périphérique des deux organes séparateurs (82, 84) est comprise entre 18 et 27 m/s, et en ce que la sortie du ventilateur de transport (60), dirigée vers l'interstice de passage (98), est disposée devant les organes séparateurs (82, 84).

2. Dispositif suivant la revendication 1, caractérisé en ce que la vitesse périphérique des deux organes séparateurs (82, 84) est comprise entre 21 et 23 m/s.

3. Dispositif suivant la revendication 1, caractérisé en ce que le dispositif de récolte (14) comporte un ventilateur de transport inférieur (50) monté dans un carter de ventilateur (51), dont l'orifice de sortie (interstice 55) s'achève au voisinage de l'organe séparateur inférieur (84) et dirige de l'air sur sa face postérieure, le long de celle-ci et vers l'arrière, jusque dans le dispositif transporteur (canal de transport 32).

4. Dispositif suivant une ou plusieurs des revendications précédentes, caractérisé en ce que les axes (86, 88) des organes séparateurs (82, 84) sont disposés sur des bras de support (94, 96) de façon à pouvoir être réglés en hauteur séparément.

FIG I

FIG. 2

FIG. 3